# EUROPEAN PATENT SPECIFICATION

(11) **EP 2 985 994 B1**
(45) Date of publication and mention of the grant of the patent: **06.05.2020**
(21) Application number: 15180816.9
(22) Date of filing: 12.08.2015
(51) Int. Cl.: H04N 9/79, H04N 5/77

(54) **METHOD AND APPARATUS FOR BACKING UP VIDEOS AND MEDIUM**
VERFAHREN UND VORRICHTUNG ZUR SICHERUNG VON VIDEOS UND MEDIUM
PROCÉDÉ ET APPAREIL PERMETTANT DE SAUVEGARDER DE VIDÉOS ET SUPPORT

(30) Priority: 15.08.2014 CN 201410404891
(43) Date of publication of application: 17.02.2016
(73) Proprietor: Xiaomi Inc., Beijing 100085 (CN)
(72) Inventor: LI, Feiyun, 100085 BEIJING (CN); GAO, Ziguang, 100085 BEIJING (CN); REN, Qiao, 100085 BEIJING (CN)
(74) Representative: Cabinet Beau de Loménie

(56) References cited:
- JP-A- 2007 208 502
- US-A1- 2006 203 101
- US-A1- 2009 260 046
- US-A1- 2011 187 895
- US-A1- 2014 071 290
- US-A1- 2014 092 757
- "U Model: FI9821W Indoor HD Pan/Tilt Wireless IP Camera Table of Contents", , 1 May 2010 (2010-05-01), XP055101691, Retrieved from the Internet: URL:http://foscam.us/downloads/FI9821W user manual.pdf [retrieved on 2014-02-12]

## Description

### TECHNICAL FIELD

The present disclosure relates to a field of storage, and more particularly to a method and a system for backing up a video.

### BACKGROUND

With the popularity of Wi-Fi, a smart camera with a function of Wi-Fi is developed rapidly, and thus a backup for a recorded video is a more important function of the smart camera. Conventionally, a backup manner of most of the smart cameras is to upload the recorded video to a cloud so as to make a cloud backup, however, the cloud backup may have a security problem, and may be limited by a user's network bandwidth, whereby the recorded video may not be quickly found and previewed.

Document US2011/187895 discloses a method of capturing a digital video image, performing an operation on the digital video image and storing the operated digital video image on a remote server.
Document "User Manual, Model: FI982W Indoor HD Pan/Tilt Wireless IP Camera Table of Contents" (1 May 2010) discloses an integrated wireless IP Camera accessible from the Internet.

### SUMMARY

In order to overcome the problems existing in the related art, the present disclosure provides a method and a system for backing up a video.

According to a first aspect, the invention relates to a method for backing up a video, comprising:
receiving, in an apparatus for backing up a video, a first setting instruction from a mobile terminal;
setting, in said apparatus, a recording parameter according to said first received setting instruction,
said first setting instruction comprising at least one of the following instructions: an instruction for setting recording quality, an instruction for setting video file group period and an instruction for setting a time length of each video file;
recording by said apparatus a video file according to said recording parameter; receiving in a local router, a second setting instruction from said mobile terminal;
backing up the recorded video file to said router connected locally, according to storage parameters set determined according to second setting instruction.

In a particular embodiment, the step of recording the video file comprises:
recording each video file according to the set recording quality and the time length of each video file;
setting recording start time of each video file as a filename of the video file, and saving locally; and
categorizing the video file recorded in the video file group period into an independent video folder.

In a particular embodiment, the step of backing up the recorded video file to the connected local router comprises:
detecting whether images in the recorded video file change; and
backing up the video file to the connected local router when it is detected that the images in the video file change.

In a particular embodiment, the step of detecting whether the images in the recorded video file change comprises:
dynamically detecting the video file; and
determining the images in the video file change when it is detected that a dynamic target exists in the video file.

In a particular embodiment, the detecting whether the images in the recorded video file change comprises:
performing a video frame detection on the video file; and
determining the images in the video file change when it is detected that an image change area of the video frame in the video file is larger than a threshold value.

In a particular embodiment, the method further comprises:
setting a a video frame which changes in the video file as a file cover of the video file.

In a particular embodiment, the connection is a Wi-Fi connection.

In an example, the step of backing up the acquired video file locally comprises:
detecting whether an image in the acquired video file changes; and
backing up the acquired video file locally when it is detected that the images in the video file change.

In an example, the step of detecting whether the image in the acquired video file changes comprises:
dynamically detecting the acquired video file; and
determining the images in the video file change when it is detected that a dynamic target exists in the video file.

In an example, the step of detecting whether the image in the acquired video file changes comprises:
performing a video frame detection on the acquired video file; and
determining the images in the video file change when it is detected that an image change area of the video frame in the video file is larger than a threshold value.

According to a second aspect, the invention relates to a system comprising a camera device, a local router, and a mobile terminal, the camera device comprising:
a receiving module configured to receive a first setting instruction from the mobile terminal;
a setting module configured to set a recording parameter according to said first received setting instruction, said first setting instruction comprising at least one of the following instructions: an instruction for setting storage quality, an instruction for setting a size of storage space and an instruction for setting storage time length; and
a recording module configured to record a video file according to said recording parameter;
and the local router comprising:
an acquisition module configured to acquire the video file recorded by said camera device;
a second receiving module configured to receive a second setting instruction from said mobile terminal;
a second setting module configured to set a storage parameter according to the received setting instruction; and
a backup module configured to back up the acquired video file locally according to a storage parameter determined according to the storage parameter.

In a particular embodiment, the local router comprises a second backup module comprising:
a second detection sub-module configured to detect whether an image in the acquired video file changes; and
a second backup sub-module configured to back up the acquired video file locally when it is detected that the images in the video file change.

In a particular embodiment, the second detection sub-module comprises:
a second dynamic detection sub-module configured to dynamically detect the acquired video file; and
a third determining sub-module configured to determine the images in the video file change when it is detected that a dynamic target exists in the video file.

The technical solutions provided by the embodiments of the present disclosure may include the following advantageous effects:

In the above embodiments of the present disclosure, by backing up the recorded video file to the connected local router, more storage space may be provided, whereby it is convenient for quickly finding and previewing files, and the stored video file has higher security.

In the above embodiments of the present disclosure, by receiving the setting instruction from the mobile terminal to set the recording parameter, the user may remotely operate the camera device by the mobile terminal.

In the above embodiments of the present disclosure, by naming the video file after the recording start time when recording the video file, and saving the set video file recorded in the video file group period in a local storage space, and categorizing the video file into the independent video folder, it may be convenient for the user to find the recorded video file.

In the above embodiments of the present disclosure, by detecting whether images in the recorded video file change before backing up the recorded video file to the connected local router, backing up the video file with no substance may be avoided by backing up the video file only for the changed image, thus the storage space is saved.

In the above embodiments of the present disclosure, by setting the changed video frame in the video file as the file cover of the video file, it may be convenient for the user to find the video file more intuitively.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for backing up a video according to an exemplary embodiment.
Fig. 2 is a flow chart illustrating a method for backing up a video according to another exemplary embodiment.
Fig. 3 is a flow chart illustrating a method for backing up a video according to another exemplary embodiment.
Fig. 4 is a diagram illustrating a video file according to a video file group period according to another exemplary embodiment.
Fig. 5 is a diagram illustrating a video folder for categorizing a video file according to an exemplary embodiment.
Fig. 6 is a diagram illustrating setting a storage parameter for a local router according to an exemplary embodiment.
Fig. 7 is a diagram illustrating dynamically detecting a video file by a camera device according to an exemplary embodiment.
Fig. 8 is a diagram illustrating making a frame detection to a video file by a camera device according to an exemplary embodiment.
Fig. 9 is a diagram illustrating setting a video frame changed in a video file as a cover of the video file according to an exemplary embodiment.
Fig. 10 is a block diagram illustrating an apparatus for backing up a video according to an exemplary embodiment.
Fig. 11 is a block diagram illustrating another apparatus for backing up a video according to an exemplary embodiment.
Fig. 12 is a block diagram illustrating another apparatus for backing up a video according to an exemplary embodiment.
Fig. 13 is a block diagram illustrating another apparatus for backing up a video according to an exemplary embodiment.
Fig. 14 is a block diagram illustrating another apparatus for backing up a video according to an exemplary embodiment.
Fig. 15 is a block diagram illustrating another apparatus for backing up a video according to an exemplary embodiment.
Fig. 16 is a block diagram illustrating another apparatus for backing up a video according to an exemplary embodiment.
Fig. 17 is a block diagram illustrating another apparatus for backing up a video according to an exemplary embodiment.
Fig. 18 is a block diagram illustrating another apparatus for backing up a video according to an exemplary embodiment.
Fig. 19 is a block diagram illustrating another apparatus for backing up a video according to an exemplary embodiment.
Fig. 20 is a block diagram illustrating another apparatus for backing up a video according to an exemplary embodiment.
Fig. 21 is a block diagram illustrating another apparatus for backing up a video according to an exemplary embodiment.
Fig. 22 is a diagram illustrating a structure for an apparatus for backing up a video according to an exemplary embodiment.
Fig. 23 is a diagram illustrating another structure for an apparatus for backing up a video according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Terminology used in the present disclosure is merely for the purpose of describing particular embodiments, and not intended to limit the present disclosure. As used in the present disclosure and the appended claims, "an", "said" and "the" in singular forms are intended to include plural forms, unless the context definitely indicates otherwise. It should also be understood that the term "and/or" used herein means and includes any or all possible combinations of one or more of the associated listed items.

It should be understood that, although the terms "first", "second", "third", etc., are used in the present disclosure to describe a variety of information, but the information should not be limited by these terms. These terms are merely used to distinguish information of one type. For example, without departing from the scope of the present disclosure, the first information may also be referred to as the second information. Similarly, the second information may also be referred to as the first information. Depending on the context, as used herein, the word "if" may be interpreted as "where ......" or "when ......" or "in response to".

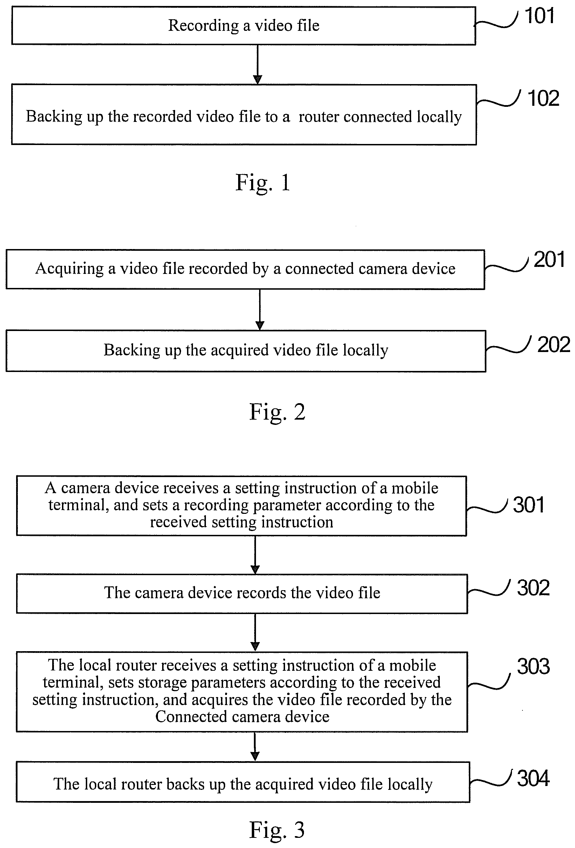

As shown in Fig. 1, Fig. 1 illustrates a method for backing up a video according to an exemplary embodiment. The method for backing up the video is applied in a camera device, and includes the following steps.

In step 101, a video file is recorded.

In the present embodiment, the camera device may set a recording parameter by receiving a setting instruction from the mobile terminal before recording the video file. The setting instruction may include at least one of the following instructions: an instruction for setting recording quality, an instruction for setting video file group period and an instruction for setting a time length of each video file.

When the setting of the recording parameter is completed, the camera device may record each video file according to the set recording quality and the time length of each video file, the recording start time of each video file is set as a filename of the video file, and is saved in a local storage space, wherein the recording quality may be designated as high definition or standard definition. Meanwhile, the recorded video file may be categorized according to the video file group period, and the video file recorded in the video file group period may be categorized into an independent video folder. For example, suppose that the time length of each video file is set as one minute and the video file group period is set as one hour, the camera device may use one-hour period and categorize the video file recorded by the camera device in one hour into an independent video folder.

Meanwhile, in order to facilitate the user to find the categorized video file, the camera device may also name the video folder as occurrence time of the categorized video file in the folder. For example, if the categorized contents in the video folder are the videos recorded during one hour at 21:00 on August 16, the video folder may be named as 21:00 on August 16.

In step 102, the recorded video file is backed up to a router connected locally. In other words the router and the device which recorder the video at step 101 are connected directly to each other by a local connection, or through a local area network.

In the present embodiment, the recorded video file may be automatically backed up to a local router after the recording is completed, or may also be backed up manually by the user. The connection may be a wireless connection, such as Wi-Fi and the like, or may also be a wired connection.

In the present embodiment, whether images in the recorded video file change may be detected before the recorded video file is backed up to the connected local router, and thus only the changed video file is backed up and the video file without substantial contents may be avoided to be backed up, thereby saving the storage space. Certainly, whether the images in the recorded video file change may also be detected in the local router.

When it is detected that whether the images in the recorded video file change, it may be achieved by dynamically detecting the video file, and determining whether a dynamic target exists in the video file. If the dynamic target exists, it is determined that the images in the video file change. Or, it may also be achieved by performing video frame detection on the video file, and comparing whether an image change area of the video frame in the video file is larger than a threshold value. If it is detected that the image change area of the video frame in the video file is larger than the threshold value, it is determined that the images in the video file change. Herein, the size of the threshold value is not special limited in the present disclosure.

In the above embodiment, by backing up the recorded video file to the connected local router, more storage space may be provided, whereby it is convenient for quickly finding and previewing files a video file, and the stored video file has higher security.

As shown in Fig. 2, Fig. 2 illustrates a method for backing up a video according to an exemplary embodiment. The method for backing up the video is applied in a local router, and includes the following steps.

In step 201, a video file recorded by a connected camera device is acquired.

In the present embodiment, that the video file recorded by the connected camera device is acquired may be actively acquired by the local router periodically, or may also be actively uploaded by the camera device. The connection may be a wireless connection, such as Wi-Fi and the like, or may also be a wired connection.

In the present embodiment, the local router may set storage parameter by receiving a setting instruction from a mobile terminal before acquiring the video file recorded by the camera device via the connection. The setting instruction may include at least one of the following instructions: an instruction for setting storage quality, an instruction for setting a size of storage space and an instruction for setting storage time length. Herein, the storage instruction may be designated as high definition or standard definition; the size of the storage space refers to the size of the space for storing the video file recorded by the camera device in a hard disk included in the local router, or may be designated by the user. For example, suppose that a space of the hard disk included in the local router is IT, the user may send the setting instruction by the mobile terminal, and set the size of the storage space as 8G, that is, the 8G in the 1T space will be used to store the video file recorded by the camera device. The storage time length refers to the maximum time length that the local router may store the video file recorded by the camera device. For example, the storage time length may be one day, one week or one month. When the storage time length is set as one month, the local router may at most back up the video files recorded by the camera device within one month.

In step 202, the acquired video file is backed up locally.

In the present embodiment, whether an image in the acquired video file changes may be detected before the acquired video file is backed up locally, and thus only the changed video file is backed up and the video file without substantial contents may be avoided to be backed up, thereby saving the storage space. Certainly, whether the images in the recorded video file change may also be detected in the camera device.

When it is detected that whether the images in the recorded video file change, it may be achieved by dynamically detecting the video file and determining whether a dynamic target exists in the video file. If the dynamic target exists, it is determined that the images in the video file change. Or, it may also be achieved by performing video frame detection on the video file and comparing whether an image change area of the video frame in the video file is larger than a threshold value. If it is detected that the image change area of the video frame in the video file is larger than the threshold value, it is determined that the images in the video file change.

In the above embodiment, by backing up the recorded video file to the connected local router, more storage space may be provided, whereby it is convenient for quickly finding and previewing video files, and the stored video file has higher security.

As shown in Fig. 3, Fig. 3 illustrates a method for backing up a video according to an exemplary embodiment. The method includes the following steps.

In step 301, a camera device receives a setting instruction from a mobile terminal, and sets a recording parameter according to the received setting instruction.

In the present embodiment, the mobile terminal may establish a connection with the camera device before send the setting instruction to the camera device. For example, when the camera device and the mobile terminal are located in a same Wireless-Fidelity (Wi-Fi) environment, the mobile terminal may be connected to the camera device via Wi-Fi. When the connection is established completely, the user may set the recording parameter to the camera device by client software preinstalled in the mobile terminal, and then send the completely set setting parameter to the camera device in the form of the setting instruction. Herein, the setting instruction may include at least one of the following instructions: an instruction for setting recording quality, an instruction for setting video file group period and an instruction for setting a time length of each video file.

In step 302, the camera device records the video file.

In the present embodiment, when the setting of the recording parameter is completed, the camera device may record the video file according to the set recording quality and the time length of each video file, the recording start time of each recorded video file is set as a filename of the video file, and is saved in a local storage space; wherein the recording quality may be designated as high definition or standard definition. Meanwhile, the recorded video file may be categorized according to the video file group period, and the video file recorded in the video file group period may be categorized into an independent video folder. Herein, in order to facilitate the user to find the categorized video file, the camera device may also name the video folder as occurrence time of the categorized video file in the folder.

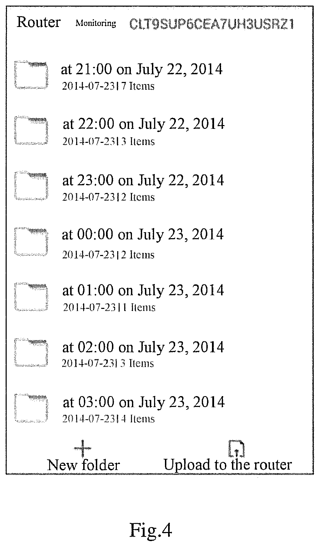

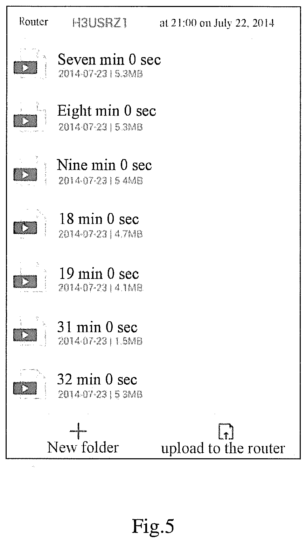

For example, referring to Fig. 4, suppose that the time length of each video file is set as one minute and the video file group period is set as one hour, the camera device may use a one-hour period and categorize the video file recorded by the camera device in one hour into an independent video folder. As shown in Fig. 4, the video recorded by the camera device in the periods from 21:00 on July 22, 2014 to 3:00 on July 23, 2014 may be categorized into an independent video folder in a period of an hour, and then each video folder may be respectively named as the recorded time period of the video file categorized in the folder. Referring to Fig. 5, Fig. 5 is a diagram of the open state of the video folder named "at 21:00 on July 22, 2014" in Fig. 4. As shown in Fig. 5, the video files in Fig. 5 are the video files recorded by the camera device in one hour from 21:00 on July 22, 2014, wherein the name of each video file is the recording start time of the video file. For example, the video file named as "7 min 0 sec" in Fig. 5 is a video file with a length of one minute recorded from 21:07:00 on July 22, 2014.

In step 303, the local router receives a setting instruction from a mobile terminal, sets storage parameters according to the received setting instruction, and acquires the video file recorded by the connected camera device.

In the present embodiment, the mobile terminal may establish a connection with the camera device before send the setting instruction to the camera device. For example, when the camera device and the mobile terminal are in a same Wi-Fi environment, the mobile terminal may be connected to a local router via Wi-Fi. When the connection is established completely, the user may set storage parameters for the local router by a client software preinstalled in the mobile terminal, and then send the set storage parameters to the local router in the form of the setting instruction. Herein, the setting instruction may include at least one of the following instructions: an instruction for setting storage quality, an instruction for setting a size of storage space and an instruction for setting storage time length. Herein, the storage quality may be high definition or standard definition, the storage time length refers to the maximum time length in which the local router may store the video file recorded by the camera device, and the size of the storage space refers to the size of the space for storing the video file recorded by the camera device in a hard disk of the local router.

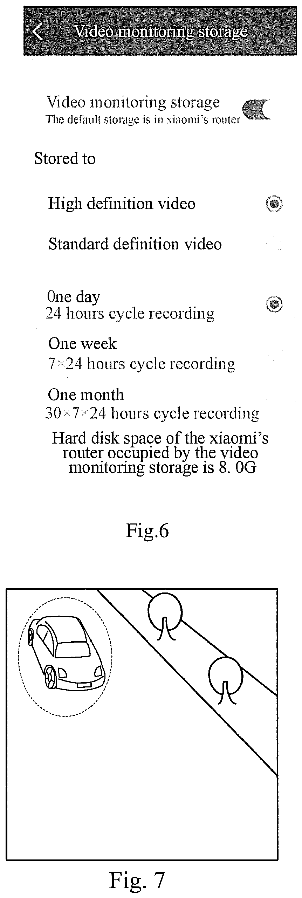

For example, referring to Fig. 6, the user may set the storage instruction to the local router as a high definition video or a standard definition video and set the storage time length as one day, one week or one month by the client software preinstalled in the mobile terminal. Suppose that the space of the hard disk included in the local router is 1T, the size of the storage space may also be set as 8G, that is, the 8G in the 1T space will be used to store the video file recorded by the camera device.

In the present embodiment, when the setting of the storage parameter is completed, the local router may locally back up the video file recorded by the camera device. Herein, when backing up the video file recorded by the camera device locally, the local router may actively acquire the recorded video file from the camera device periodically to back up; or may receive the video file uploaded by the camera device to back up. When the camera device uploads the recorded video file, the video file may be automatically uploaded to a local router after the recording is completed, or may be manually uploaded by the user by providing an upload option for the user.

Herein, the camera device may detect whether images in the recorded video file change before the recorded video file is uploaded to the local router, so that only the changed video file is backed up and thus the backup of the video file with no substantial contented may be avoided, thereby saving the storage space.

When the camera device detects whether the images in the recorded video file change, it may be achieved by dynamically detecting the video file and determining whether a dynamic target exists in the video file; or it may also be achieved by performing a video frame detection on the video file and comparing whether an image change area of the video frame in the video file is larger than a threshold value.

For example, referring to Fig. 7, when the camera device dynamically detects the video file, it may be judged that whether a dynamic target existing in the video file is detected; if the dynamic target such as a moving vehicle is detected, it is determined that the images in the video file change. Otherwise, if the dynamic target is not detected, it indicates that the contents interesting the user do not probably exist in the video file. For example, for applications in the field of video surveillance, when the dynamic target does not exist in the video file captured by the camera, the video file needn't to be replayed, and it is completely unnecessary to back up the video file without any dynamic target.

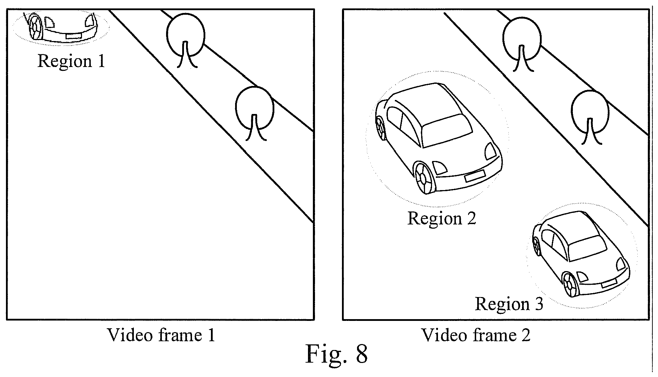

Referring to Fig. 8, when performing a video frame detection on the video file, the camera device may judge whether an image change area of the video frame in the video file is larger than a threshold value. If the image change area is larger than the threshold value, it is determined that the images in the video file change. Otherwise, if the image change area of the video frame in the video file is less than or equal to the threshold value, it is thought that the image in the video file does not change, and thus the video file is backed up. Herein, the threshold value is not special limited in the present disclosure.

For example, two frames of the images may be extracted from the video file, and then a pixel comparison to the two frames of the image is made. When the area of the number of pixels of different image occupied in the image is larger than the threshold value, it is thought that the video file changes. As shown in Fig. 8, a video frame 1 shows a corner of a traveling vehicle, a video frame 2 has included completely two traveling vehicles, and thus when making the pixel comparison between the video frame 1 and the video frame 2, a region 1, a region 2 and a region 3 shown in Fig. 8 may be a region that the image has changed. Thus, if the total area of the region 1, the region 2 and the region 3 is larger than the threshold value, it is thought that the video file changes.

Herein, the extracted two frames of the image may be a start frame and an end frame, or may be two frames randomly extracted from all video frames in the video file. Certainly, when it is judged whether the image change area of the video frame in the video file is larger than the threshold value, the video frame may not be extracted for comparison, but all video frames in the video file are continuously compared. Comparing other frame of images except for a first frame of images in the video file with a previous frame of images, when the area of the number of pixels of different image between the other frame of images and the previous frame of images which is occupied in the image is larger than the threshold value, it is thought that the video file changes.

In step 304, the local router backs up the acquired video file to a local.

In the present embodiment, the local router may detect whether an image in the acquired video file changes before backing up the acquired video file locally, so that only the changed video file is backed up and thus the backup of the video file with no substantial contented may be avoided, thereby saving the storage space. Herein, when the local router detects whether the images in the recorded video file change, it may be achieved by dynamically detecting the video file, and determining whether a dynamic target exists in the video file; or it may also be achieved by performing a video frame detection on the video file, and comparing whether an image change area of the video frame in the video file is larger than a threshold value. The detailed processes are the same as that described above, which are not described herein.

Certainly, if the operation of detecting whether the image in the video file recorded locally has changed has been performed before the camera device uploads the video file to a local router, only the video file in which the image has changed is uploaded to a local router, and then the local router does not locally detect whether the image in the video file has changed for the acquired video file.

In the above embodiment, by backing up the video file recorded by the camera device to the local router connected with the camera device, more storage space may be provided for the backup of the video file, and when finding and previewing the backup video file, the backup video file may be found and previewed in the local router, whereby it is more convenient and quick, and the security is higher.

In the above embodiment, by backing up the recorded video file to the connected local router, more storage space may be provided, whereby it is convenient for quickly finding and previewing files, and the stored video file has higher security.

Moreover, whether images in the recorded video file change may be detected before the video file recorded by the camera device is backed up, so that only the changed video file is backed up and thus the backup of the video file with no substantial contented may be avoided, thereby saving the storage space.

In another optional embodiment, referring to the embodiments shown in above Fig. 1 or Fig. 3, the camera device may set the a video frame which changes in the video file as a file cover of the video file, so that when a user finds the backup video file, the user may preliminarily find out the file contents of the video file through the file cover, whereby the finding is more intuitive.

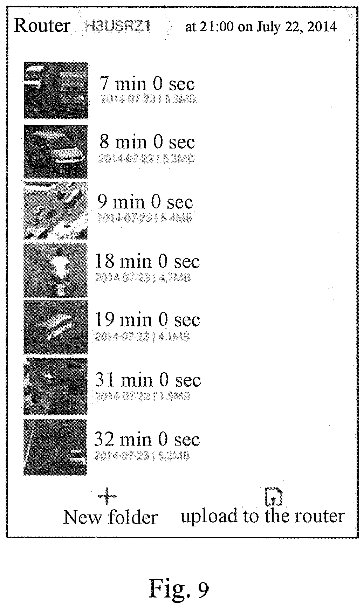

For example, referring to Fig. 9, the cover of the backup video file is set as the video frame which changes in the video file, whereby the video frame which changes in the video file may be intuitively presented when the video file is not opened.

Corresponding to the above embodiments of the method for backing up a video, the present disclosure also provides the embodiments of an apparatus for backing up a video.

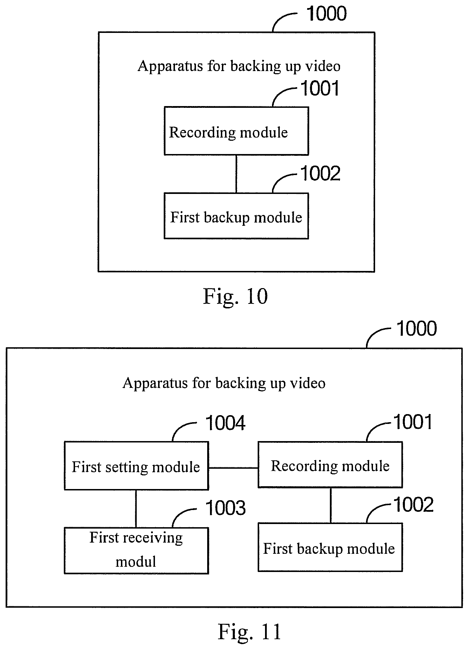

Fig. 10 is a block diagram illustrating an apparatus for backing up a video according to an exemplary embodiment.

As shown in Fig 10, illustrating an apparatus 1000 for backing up a video according to an exemplary embodiment, the apparatus 1000 is applied in a camera device, and includes: a recording module 1001 and a first backup module 1002; wherein,
the recording module 1001 is configured to record a video file; and
the first backup module 1002 is configured to back up the recorded video file to a router connected locally.

In the above embodiment, by backing up the recorded video file to the connected local router, more storage space may be provided, thus it is convenient for quickly finding and previewing files, and the stored video file has higher security.

Referring to Fig. 11 which is a block diagram illustrating another apparatus for backing up a video according to an exemplary embodiment, the embodiment is based on the aforementioned embodiment shown in Fig. 10. The apparatus 1000 may further include a first receiving module 1003 and a first setting module 1004, wherein,
the first receiving module 1003 is configured to receive a setting instruction from a mobile terminal before recording the video file; and
the first setting module 1004 is configured to set a recording parameter according to the received setting instruction;
wherein the setting instruction includes at least one of the following instructions: an instruction for setting recording quality, an instruction for setting video file group period and an instruction for setting a time length of each video file.

In the above embodiment, by receiving the setting instruction from the mobile terminal to set the recording parameter, the user may remotely operate the camera device by the mobile terminal.

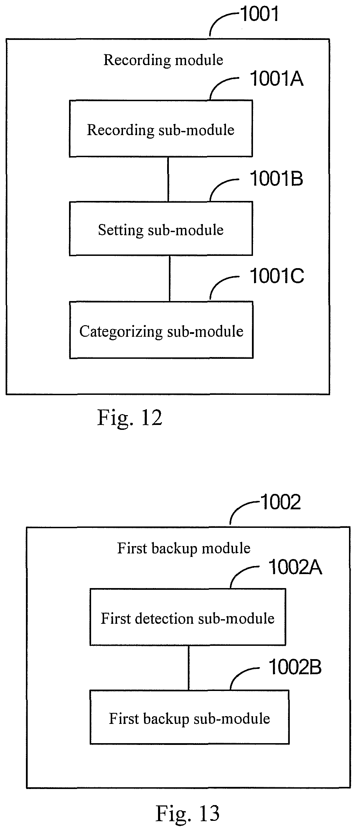

Referring to Fig. 12 which is a block diagram illustrating another apparatus for backing up a video according to an exemplary embodiment, the embodiment is based on the aforementioned embodiment shown in Fig. 10. The recording module 1001 may include a recording sub-module 1001A, a setting sub-module 1001B and a categorizing sub-module 1001C, wherein:
the recording sub-module 1001A is configured to record each video file according to the set recording quality and the time length of each video file;
the setting sub-module 1001B is configured to set recording start time of each video file as a filename of the video file, and save in a local; and
the categorizing sub-module 1001C is configured to categorize the video file recorded in the video file group period into an independent video folder.

It should be noted that, the configuration of the recording sub-module 1001A, the setting sub-module 1001B and the categorizing sub-module 1001C illustrated in the above apparatus embodiment shown in Fig. 12 may also be included in the above apparatus embodiment shown in Fig. 11, which the present disclosure does not limit.

In the above embodiment, by naming the video file after the recording start time when recording the video file, and saving the set video file recorded in the video file group period in a local storage space, and categorizing the video file into the independent video folder, it may be convenient for the user to find the recorded video file.

Referring to Fig. 13 which is a block diagram illustrating another apparatus for backing up a video according to an exemplary embodiment, the embodiment is based on the aforementioned embodiment shown in Fig. 10. The first backup module 1002 may include a first detection sub-module 1002A and a first backup sub-module 1002B, wherein,
the first detection sub-module 1002A is configured to detect whether images in the recorded video file change; and
the first backup sub-module 1002B is configured to back up the video file to the connected local router when it is detected that the images in the video file change.

It should be noted that, the configuration of the first detection sub-module 1002A and the first backup sub-module 1002B illustrated in the above apparatus embodiment shown in Fig. 13 may also be included in the above apparatus embodiments of the aforementioned Fig. 11 to Fig. 12, which the present disclosure does not limit.

In the above embodiment, by detecting whether images in the recorded video file change before backing up the recorded video file to the connected local router, backing up the video file with no substance may be avoided by backing up the video file only for the changed image, thus the storage space is saved.

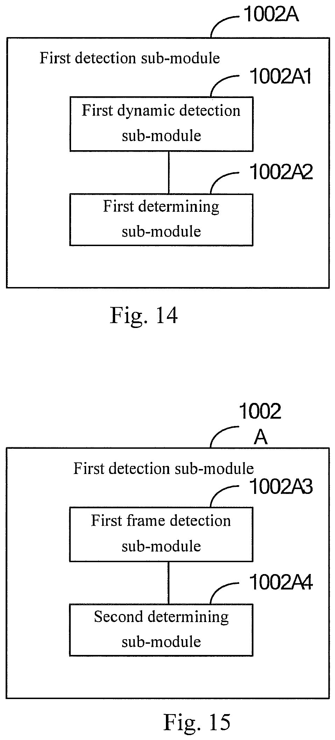

Referring to Fig. 14 which is a block diagram illustrating another apparatus for backing up a video according to an exemplary embodiment, the embodiment is based on the aforementioned embodiment shown in Fig. 13. The first detection sub-module 1002A may further include a first dynamic detection sub-module 1002A1 and a first determining sub-module 1002A2, wherein,
the first dynamic detection sub-module 1002A1 is configured to dynamically detect the video file; and
the first determining sub-module 1002A2 is configured to determine the images in the video file change when it is detected that a dynamic target exists in the video file.

It should be noted that, the configuration of the first dynamic detection sub-module 1002A1 and the first determining sub-module 1002A2 illustrated in the above apparatus embodiment shown in Fig. 14 may also be included in the above apparatus embodiments of the aforementioned Fig. 11 to Fig. 13, which the present disclosure does not limit.

Referring to Fig. 15 which is a block diagram illustrating another apparatus for backing up a video according to an exemplary embodiment, the embodiment is based on the aforementioned embodiment shown in Fig. 13. The first detection sub-module 1002A may further include a first frame detection sub-module 1002A3 and a second determining sub-module 1002A4; wherein,
the first frame detection sub-module 1002A3 is configured to make a video frame detection to the video file; and
the second determining sub-module 1002A4 is configured to determine the images in the video file change when it is detected that an image change area of the video frame in the video file is larger than a threshold value.

It should be noted that, the configuration of the first frame detection sub-module 1002A3 and the second determining sub-module 1002A4 illustrated in the above apparatus embodiment shown in Fig. 15 may also be included in the above apparatus embodiments of the aforementioned Fig. 11 to Fig. 14, which the present disclosure does not limit.

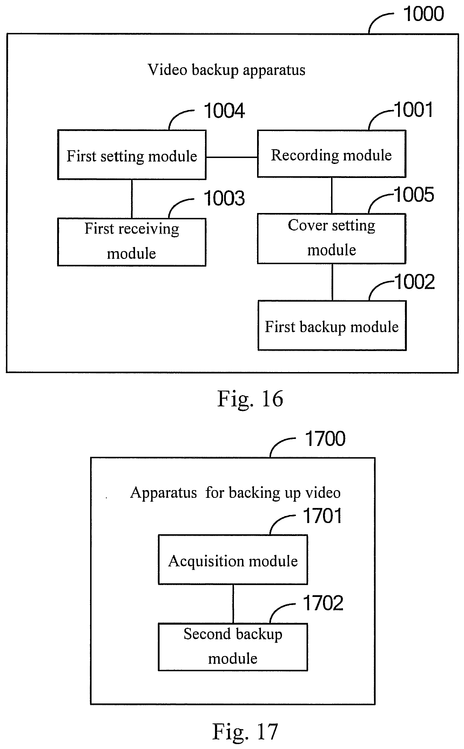

Referring to Fig. 16 which is a block diagram illustrating another apparatus for backing up a video according to an exemplary embodiment, the embodiment is based on the aforementioned embodiment shown in Fig. 11. The apparatus 1000 may further include a cover setting module 1005, wherein,
the cover setting module 1005 is configured to set the a video frame which changes in the video file as a file cover of the video file.

It should be noted that, the configuration of the cover setting module 1005 illustrated in the above apparatus embodiment shown in Fig. 16 may also be included in the above apparatus embodiments of the aforementioned Fig. 11 to Fig. 15, which the present disclosure does not limit.

In the above embodiment, by setting the changed video frame in the video file as the file cover of the video file, it may be convenient for the user to find the video file more intuitively.

Fig. 17 is a block diagram illustrating an apparatus for backing up a video according to an exemplary embodiment.

As shown in Fig. 17, illustrating an apparatus 1700 for backing up a video according to an exemplary embodiment. The apparatus 1700 is applied in a local router, and includes: an acquisition module 1701 and a second backup module 1702, wherein,
the acquisition module 1701 is configured to acquire a video file recorded by a connected camera device; and
the second backup module 1702 is configured to back up the acquired video file locally.

In the above embodiment, by backing up the recorded video file to the connected local router, more storage space may be provided, whereby it is convenient for quickly finding and previewing files video files, and the stored video file has higher security.

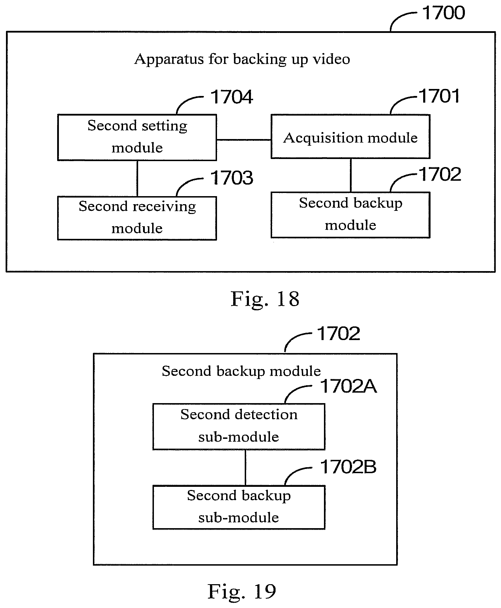

Referring to Fig. 18 which is a block diagram illustrating another apparatus for backing up a video according to an exemplary embodiment, the embodiment is based on the aforementioned embodiment shown in Fig. 17. The apparatus 1700 may further include a second receiving module 1703 and a second setting module 1704, wherein,
the second receiving module 1703 is configured to receive a setting instruction from a mobile terminal before acquire the video file recorded by the camera device via the connection; and
the second setting module 1704 is configured to set a storage parameter according to the received setting instruction.

In the above embodiment, by receiving the setting instruction from the mobile terminal to set the recording parameter, the user may remotely operate the camera device by the mobile terminal.

Referring to Fig. 19 which is a block diagram illustrating another apparatus for backing up a video according to an exemplary embodiment, the embodiment is based on the aforementioned embodiment shown in Fig. 17. The second backup module 1702 may include a second detection sub-module 1702A and a second backup sub-module 1702B; wherein,
the second detection sub-module 1702A is configured to detect whether an image in the acquired video file changes; and
the second backup sub-module 1702B is configured to back up the acquired video file locally when it is detected that the images in the video file change.

It should be noted that, the configuration of the second detection sub-module 1702A and the second backup sub-module 1702B illustrated in the above apparatus embodiment shown in Fig. 19 may also be included in the above apparatus embodiment of the aforementioned Fig. 18, which the present disclosure does not limit.

In the above embodiment, by detecting whether images in the recorded video file change before backing up the recorded video file to the connected local router, backing up the video file with no substance may be avoided by backing up the video file only for the changed image, thus the storage space is saved.

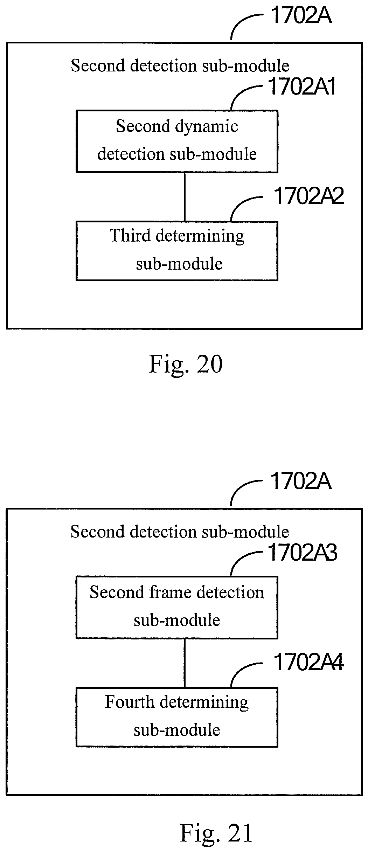

Referring to Fig. 20 which is a block diagram illustrating another apparatus for backing up a video according to an exemplary embodiment, the embodiment is based on the aforementioned embodiment shown in Fig. 19. The second detection sub-module 1702A may include a second dynamic detection sub-module 1702A1 and a third determining sub-module 1702A2; wherein,
the second dynamic detection sub-module 1702A1 is configured to dynamically detect the acquired video file; and
the third determining sub-module 1702A2 is configured to determine the images in the video file change when it is detected that a dynamic target exists in the video file.

It should be noted that, the configuration of the second dynamic detection sub-module 1702A1 and the third determining sub-module 1702A2 illustrated in the above apparatus embodiment shown in Fig. 20 may also be included in the above apparatus embodiments of the aforementioned Fig. 18 to Fig. 19, which the present disclosure does not limit.

Referring to Fig. 21 which is a block diagram illustrating another apparatus for backing up a video according to an exemplary embodiment, the embodiment is based on the aforementioned embodiment shown in Fig. 19. The second detection sub-module 1702A may include a second frame detection sub-module 1702A3 and a fourth determining sub-module 1702A4; wherein,
the second frame detection sub-module 1702A3 is configured to make a video frame detection to the acquired video file; and
the fourth determining sub-module 1702A4 is configured to determine the images in the video file change when it is detected that an image change area of the video frame in the video file is larger than a threshold value.

It should be noted that, the configuration of the second frame detection sub-module 1702A3 and the fourth determining sub-module 1702A4 illustrated in the above apparatus embodiment shown in Fig. 21 may also be included in the above apparatus embodiments of the aforementioned Fig. 18 to Fig. 20, to which the present disclosure is not limited.

The specific implementation processes of the function and role of each module in the above apparatus have been in detail described in the implementation processes corresponding to the steps in the above methods, which are not described herein any further.

For the apparatus embodiment, since it substantially corresponds to the method embodiment, the relevant place refers to the description of part of the method embodiments. The apparatus embodiment described above embodiment is merely schematic, wherein the module described as a separate part may be or may also not be physically separated, the part displayed as the module may be or may also not be a physical module, i.e., it may be located in one place, or may also be distributed to a plurality of network modules. Some or all of the modules may be selected according to the actual needs to achieve the purpose of the solution of the present disclosure. Those skilled in the art may understand and implement without any creative labor.

Correspondingly, the present disclosure further provides an apparatus for backing up a video, including a memory and one or more programs, wherein the one or more programs are stored in the memory, and configured to be executable by one or more processors, wherein the one or more programs includes instructions to cause operations as follows:
recording a video file; and
backing up the recorded video file to a router connected locally.

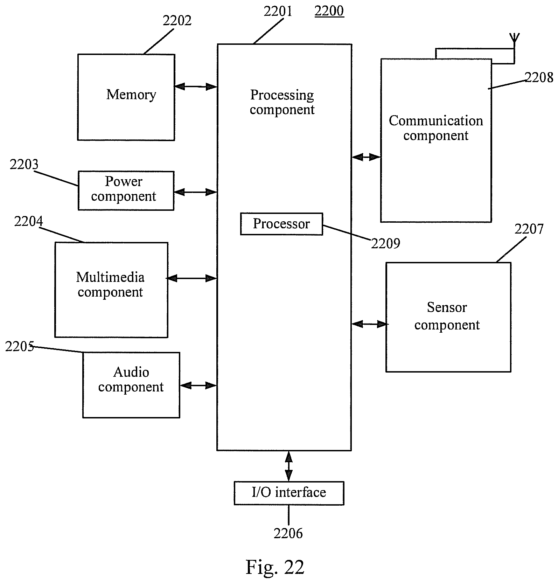

Fig. 22 is a structure diagram illustrating an apparatus for backing up a video according to an exemplary embodiment.

As shown in Fig. 22, illustrating a device 2200 for backing up a video according to an exemplary embodiment. The device 2200 may be a smart camera, a mobile phone, a computer, a digital broadcast terminal, a message receiving and sending device, a gaming console, a tablet, a medical device, exercise equipment, a personal digital assistant, and the like.

Referring to Fig. 22, the device 2200 may include one or more of the following components: a processing component 2201, a memory 2202, a power component 2203, a multimedia component 2204, an audio component 2205, an input/output (I/O) interface 2206, a sensor component 2207, and a communication component 2208.

The processing component 2201 typically controls overall operations of the device 2200, such as the operations associated with display, telephone calls, data communications, camera operations, and recording operations. The processing component 2201 may include one or more processors 2209 to execute instructions to perform all or part of the steps in the above described methods. Moreover, the processing component 2201 may include one or more modules which facilitate the interaction between the processing component 2201 and other components. For instance, the processing component 2201 may include a multimedia module to facilitate the interaction between the multimedia component 2208 and the processing component 2201.

The memory 2202 is configured to store various types of data to support the operation of the device 2200. Examples of such data include instructions for any applications or methods operated on the device 2200, contact data, phonebook data, messages, pictures, video, etc. The memory 2203 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2203 provides power to various components of the device 2200. The power component 2203 may include a power management system, one or more power sources, and any other components associated with the generation, management, and distribution of power in the device 2200.

The multimedia component 2204 includes a screen providing an output interface between the device 2200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2204 includes a front camera and/or a rear camera. The front camera and the rear camera may receive an external multimedia datum while the device 2200 is in an operation mode, such as a photographing mode or a video mode. Each of the front camera and the rear camera may be a fixed optical lens system or have focus and optical zoom capability.

The audio component 2205 is configured to output and/or input audio signals. For example, the audio component 2205 includes a microphone ("MIC") configured to receive an external audio signal when the device 2200 is in an operation mode, such as a call mode, a recording mode, and a voice recognition mode. The received audio signal may be further stored in the memory 2202 or transmitted via the communication component 2208. In some embodiments, the audio component 2205 further includes a speaker to output audio signals.

The I/O interface 2202 provides an interface between the processing component 2201 and peripheral interface modules, such as a keyboard, a click wheel, buttons, and the like. The buttons may include, but are not limited to, a home button, a volume button, a starting button, and a locking button.

The sensor component 2207 includes one or more sensors to provide status assessments of various aspects of the device 2200. For instance, the sensor component 2207 may detect an open/closed status of the device 2200, relative positioning of components, e.g., the display and the keypad, of the device 2200, a change in position of the device 2200 or a component of the device 2200, a presence or absence of user contact with the device 2200, an orientation or an acceleration/deceleration of the device 2200, and a change in temperature of the device 2200. The sensor component 2207 may include a proximity sensor configured to detect the presence of nearby objects without any physical contact. The sensor component 2207 may further include a light sensor, such as a CMOS or CCD image sensor, for use in imaging applications. In some embodiments, the sensor component 2207 may further include an accelerometer sensor, a gyroscope sensor, a magnetic sensor, a pressure sensor, or a temperature sensor.

The communication component 2208 is configured to facilitate communication, wired or wirelessly, between the device 2200 and other devices. The device 2200 can access a wireless network based on a communication standard, such as WiFi, 2G, or 3G, or a combination thereof. In one exemplary embodiment, the communication component 2208 receives a broadcast signal or broadcast associated information from an external broadcast management system via a broadcast channel. In one exemplary embodiment, the communication component 2208 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 2200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there further provides a non-transitory computer-readable storage medium including instructions, such as included in the memory 2202, executable by the processor 2209 in the device 2200, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by the processor of a terminal, the terminal may execute a method for backing up a video, wherein the method includes:
recording a video file; and
backing up the recorded video file to a router connected locally.

Correspondingly, the present disclosure further provides another device for backing up a file, including a memory and one or more programs, wherein the one or more programs are stored in the memory, and configured to be executable by one or more processors, wherein the one or more programs includes instructions to cause operations as follows:
acquiring a video file recorded by a connected camera device; and
backing up the acquired video file locally.

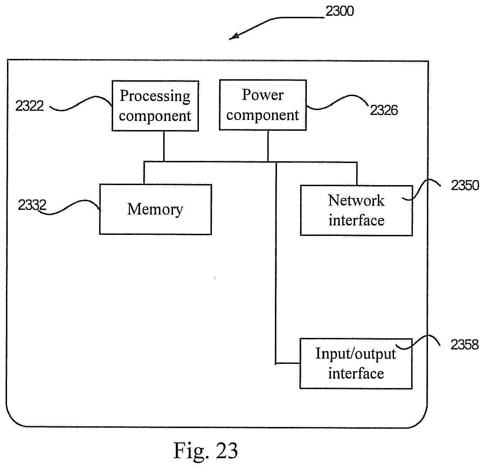

Fig. 23 is another block diagram of a device 2300 for backing up a file, according to an exemplary embodiment. For example, the device 2300 may be provided as a server. Referring to Fig. 23, the server 2300 includes a processing component 2322, and further includes one or more processors and storage resources represented by a memory 2332 for storing instructions executable by the processing component 2322, such as application programs. The application programs stored in the memory 2332 may include one or more modules each corresponding to a set of instructions. In addition, the processing component 2322 is configured to execute instructions to perform the above method for backing up a file.

The device 2300 may further include: a power component 2326, configured to manage the power of the device 2300; a wired or wireless network interfaces 2350, configured connect the device 2300 to a network; and an input/output (I/O) interfaces 2358. The device 2300 may operate under an operating system stored in the memory 2332, such as Windows ServerTM, Mac OS XTM, UnixTM, LinuxTM, FreeBSDTM, and the like.

After considering this description and carrying out the embodiments disclosed herein, those skilled in the art may easily anticipate other implementation aspects of the present disclosure. The description and embodiments are only exemplary, and the real range of the present disclosure are defined by the following claims.

## Claims

1. A method for backing up a video, the method comprising:
receiving (301), in a camera device, a first setting instruction from a mobile terminal;
setting (301), in said camera device, a recording parameter according to said first received setting instruction, said first setting instruction comprising at least one of the following instructions: an instruction for setting recording quality, an instruction for setting video file group period and an instruction for setting a time length of each video file;
recording (101) by said camera device a video file according to said recording parameter;
**characterized in that**, the method further comprises:
receiving (303) by a local router, a second setting instruction from said mobile terminal;
backing up (102) the recorded video file by said local router, according to storage parameters set according to the second setting instruction.

2. The method according to claim 1, further **characterized in that**, the recording the video file comprises:
recording each video file according to the set recording quality and the time length of each video file;
setting (303) recording start time of each video file as a filename of the video file, and saving locally; and
categorizing the video file recorded in the video file group period into an independent video folder.

3. The method according to claim 1 or 2, further **characterized in that**, the step of backing up the recorded video file to the local router comprises:
detecting whether images in the recorded video file change; and
backing up the video file to the local router when it is detected that the images in the video file change.

4. The method according to claim 3, further **characterized in that**, the step of detecting whether the images in the recorded video file change comprises:
dynamically detecting the video file; and
determining that the images in the video file change when it is detected that a dynamic target exists in the video file.

5. The method according to claim 3, further **characterized in that**, the step of detecting whether the images in the recorded video file change comprises:
performing a video frame detection on the video file; and
determining the images in the video file change when it is detected that an image change area of the video frame in the video file is larger than a threshold value.

6. The method according to any one of claims 3 to 5, further **characterized in that**, the method further comprises:
setting by the camera device a video frame which changes in the video file as a file cover of the video file.

7. The method according to any one of claims 1 to 6, further **characterized in that**, the local connection between the camera device and the local router is a Wi-Fi connection.

8. A system comprising a camera device (1000), a local router (1700), and a mobile terminal, wherein the camera device comprises:
a receiving module (1003) configured to receive a first setting instruction from the mobile terminal;
a setting module (1004) configured to set a recording parameter according to said first received setting instruction, said first setting instruction comprising at least one of the following instructions: an instruction for setting storage quality, an instruction for setting a size of storage space and an instruction for setting storage time length; and
a recording module (1001) configured to record a video file according to said recording parameter;
**characterized in that** the local router (1700) comprises:
an acquisition module (1701) configured to acquire the video file recorded by said camera device;
a second receiving module (1703) configured to receive a second setting instruction from said mobile terminal;
a second setting module (1704) configured to set a storage parameter according to the received setting instruction;
a backup module (1702) configured to back up the acquired video file locally according to the storage parameter.

9. The system according to claim 8, further **characterized in that** the local router (1700) comprises a second backup module comprising:
a second detection sub-module (1702A) configured to detect whether an image in the acquired video file changes; and
a second backup sub-module (1702B) configured to back up the acquired video file locally when it is detected that the images in the video file change.

10. The system according to claim 9, further **characterized in that** the second detection sub-module (1702A) comprises:
a second dynamic detection sub-module (1702A1) configured to dynamically detect the acquired video file; and
a third determining sub-module (1702A2) configured to determine the images in the video file change when it is detected that a dynamic target exists in the video file.

## Patentansprüche

1. Verfahren zur Sicherung eines Videos, wobei das Verfahren umfasst:
Empfangen (301) in einer Kameravorrichtung einer ersten Einstellungsanweisung von einem mobilen Endgerät,
Einstellen (301) in der Kameravorrichtung eines Aufzeichnungsparameters gemäß der ersten empfangenen Einstellungsanweisung, wobei die erste Einstellungsanweisung mindestens eine der folgenden Anweisungen umfasst: eine Anweisung zum Einstellen einer Aufzeichnungsqualität, eine Anweisung zum Einstellen einer Videodatei-Gruppenperiode und eine Anweisung zum Einstellen einer Zeitdauer jeder Videodatei,
Aufzeichnen (101) einer Videodatei gemäß dem Aufzeichnungsparameter durch die Kameravorrichtung,
**dadurch gekennzeichnet, dass** das Verfahren ferner umfasst:
Empfangen (303) durch einen lokalen Router einer zweiten Einstellungsanweisung von dem mobilen Endgerät und
Sichern (102) der aufgezeichneten Videodatei durch den lokalen Router gemäß Speicherparametern, die gemäß der zweiten Einstellungsanweisung eingestellt sind.

2. Verfahren nach Anspruch 1, ferner **dadurch gekennzeichnet, dass** das Aufzeichnen der Videodatei umfasst:
Aufzeichnen jeder Videodatei gemäß der eingestellten Aufzeichnungsqualität und der Zeitdauer jeder Videodatei,
Einstellen (303) einer Aufzeichnungsstartzeit jeder Videodatei als einen Dateinamen der Videodatei und lokales Speichern und
Kategorisieren der in der Videodatei-Gruppenperiode aufgezeichneten Videodatei in einen unabhängigen Videoordner.

3. Verfahren nach Anspruch 1 oder 2, ferner **dadurch gekennzeichnet, dass** der Schritt des Sicherns der aufgezeichneten Videodatei auf dem lokalen Router umfasst:
Erfassen, ob sich Bilder in der aufgezeichneten Videodatei ändern, und
Sichern der Videodatei auf dem lokalen Router, wenn erfasst wird, dass sich die Bilder in der Videodatei ändern.

4. Verfahren nach Anspruch 3, ferner **dadurch gekennzeichnet, dass** der Schritt des Erfassens, ob sich die Bilder in der aufgezeichneten Videodatei ändern, umfasst:
dynamisches Erfassen der Videodatei und
Bestimmen, dass sich die Bilder in der Videodatei ändern, wenn erfasst wird, dass ein dynamisches Ziel in der Videodatei existiert.

5. Verfahren nach Anspruch 3, ferner **dadurch gekennzeichnet, dass** der Schritt des Erfassens, ob sich die Bilder in der aufgezeichneten Videodatei ändern, umfasst:
Durchführen einer Videorahmenerfassung an der Videodatei und
Bestimmen, dass sich die Bilder in der Videodatei ändern, wenn erfasst wird, dass ein Bildänderungsbereich des Videorahmens in der Videodatei größer ist als ein Schwellenwert.

6. Verfahren nach einem der Ansprüche 3 bis 5, ferner **dadurch gekennzeichnet, dass** das Verfahren ferner umfasst:
Einstellen durch die Kameravorrichtung eines Videorahmens, der sich in der Videodatei ändert, als einen Dateititel der Videodatei.

7. Verfahren nach einem der Ansprüche 1 bis 6, ferner **dadurch gekennzeichnet, dass** die lokale Verbindung zwischen der Kameravorrichtung und dem lokalen Router eine Wi-Fi-Verbindung ist.

8. System, umfassend eine Kameravorrichtung (1000), einen lokalen Router (1700) und ein mobiles Endgerät, wobei die Kameravorrichtung umfasst:
ein Empfangsmodul (1003), das dazu ausgestaltet ist, von dem mobilen Endgerät eine erste Einstellungsanweisung zu empfangen,
ein Einstellungsmodul (1004), das dazu ausgestaltet ist, einen Aufzeichnungsparameter gemäß der ersten empfangenen Einstellungsanweisung einzustellen, wobei die erste Einstellungsanweisung mindestens eine der folgenden Anweisungen umfasst: eine Anweisung zum Einstellen einer Speicherqualität, eine Anweisung zum Einstellen einer Größe eines Speicherplatzes und eine Anweisung zum Einstellen einer Speicherzeitdauer, und
ein Aufzeichnungsmodul (1001), das dazu ausgestaltet ist, eine Videodatei gemäß dem Aufzeichnungsparameter aufzuzeichnen,
**dadurch gekennzeichnet, dass** der lokale Router (1700) umfasst:
ein Bezugsmodul (1701), das dazu ausgestaltet ist, die von der Kameravorrichtung aufgezeichnete Videodatei zu beziehen,
ein zweites Empfangsmodul (1703), das dazu ausgestaltet ist, von dem mobilen Endgerät eine zweite Einstellungsanweisung zu empfangen,
ein zweites Einstellungsmodul (1704), das dazu ausgestaltet ist, einen Speicherparameter gemäß der empfangenen Einstellungsanweisung einzustellen, und
ein Sicherungsmodul (1702), das dazu ausgestaltet ist, die bezogene Videodatei gemäß dem Speicherparameter lokal zu sichern.

9. System nach Anspruch 8, ferner **dadurch gekennzeichnet, dass** der lokale Router (1700) ein zweites Sicherungsmodul umfasst, umfassend:
ein zweites Erfassungsteilmodul (1702A), das dazu ausgestaltet ist, zu erfassen, ob sich ein Bild in der bezogenen Videodatei ändert, und
ein zweites Sicherungsteilmodul (1702B), das dazu ausgestaltet ist, die bezogene Videodatei lokal zu sichern, wenn erfasst wird, dass sich die Bilder in der Videodatei ändern.

10. System nach Anspruch 9, ferner **dadurch gekennzeichnet, dass** das zweite Erfassungsteilmodul (1702A) umfasst:
ein zweites dynamisches Erfassungsteilmodul (1702A1), das dazu ausgestaltet ist, die bezogene Videodatei dynamisch zu erfassen, und
ein drittes Bestimmungsteilmodul (1702A2), das dazu ausgestaltet ist, zu bestimmen, dass sich die Bilder in der Videodatei ändern, wenn erfasst wird, dass ein dynamisches Ziel in der Videodatei existiert.

## Revendications

1. Procédé de sauvegarde d'une vidéo, le procédé comprenant les étapes ci-dessous consistant à :
recevoir (301), dans un dispositif de caméra, une première instruction de définition provenant d'un terminal mobile ;
définir (301), dans ledit dispositif de caméra, un paramètre d'enregistrement selon ladite première instruction de définition reçue, ladite première instruction de définition comprenant au moins l'une des instructions suivantes : une instruction pour définir une qualité d'enregistrement, une instruction pour définir une période de groupe de fichiers vidéo, et une instruction pour définir une durée de chaque fichier vidéo ;
enregistrer (101), par le biais dudit dispositif de caméra, un fichier vidéo, selon ledit paramètre d'enregistrement ;
**caractérisé en ce que** le procédé comprend en outre les étapes ci-dessous consistant à :
recevoir (303), par le biais d'un routeur local, une seconde instruction de définition provenant dudit terminal mobile ; et
sauvegarder (102) le fichier vidéo enregistré, par le biais dudit routeur local, selon des paramètres de stockage définis conformément à la seconde instruction de définition.

2. Procédé selon la revendication 1, **caractérisé en outre en ce que** l'étape d'enregistrement du fichier vidéo comprend les étapes ci-dessous consistant à :
enregistrer chaque fichier vidéo selon la qualité d'enregistrement définie et la durée de chaque fichier vidéo ;
définir (303) un instant de début d'enregistrement de chaque fichier vidéo en tant qu'un nom de fichier du fichier vidéo, et enregistrer localement ; et
classer le fichier vidéo enregistré au cours de la période de groupe de fichiers vidéo dans un dossier vidéo indépendant.

3. Procédé selon la revendication 1 ou 2, **caractérisé en outre en ce que** l'étape de sauvegarde du fichier vidéo enregistré au niveau du routeur local comprend les étapes ci-dessous consistant à :
détecter si des images dans le fichier vidéo enregistré changent ; et
sauvegarder le fichier vidéo au niveau du routeur local lorsqu'il est détecté que les images dans le fichier vidéo changent.

4. Procédé selon la revendication 3, **caractérisé en outre en ce que** l'étape consistant à détecter si les images dans le fichier vidéo enregistré changent comprend les étapes ci-dessous consistant à :
détecter dynamiquement le fichier vidéo ; et
déterminer que les images dans le fichier vidéo changent lorsqu'il est détecté qu'une cible dynamique existe dans le fichier vidéo.

5. Procédé selon la revendication 3, **caractérisé en outre en ce que** l'étape consistant à détecter si les images dans le fichier vidéo enregistré changent comprend les étapes ci-dessous consistant à :
mettre en œuvre une détection de trame vidéo sur le fichier vidéo ; et
déterminer que les images dans le fichier vidéo changent lorsqu'il est détecté qu'une zone de changement d'image de la trame vidéo dans le fichier vidéo est plus grande qu'une valeur de seuil.

6. Procédé selon l'une quelconque des revendications 3 à 5, **caractérisé en outre en ce que** le procédé comprend en outre l'étape ci-dessous consistant à :
définir, par le biais du dispositif de caméra, une trame vidéo qui change dans le fichier vidéo, en tant qu'une couverture de fichier du fichier vidéo.

7. Procédé selon l'une quelconque des revendications 1 à 6, **caractérisé en outre en ce que** la connexion locale entre le dispositif de caméra et le routeur local est une connexion Wi-Fi.

8. Système comprenant un dispositif de caméra (1000), un routeur local (1700) et un terminal mobile, dans lequel le dispositif de caméra comprend :
un module de réception (1003) configuré de manière à recevoir une première instruction de définition en provenance du terminal mobile ;
un module de définition (1004) configuré de manière à définir un paramètre d'enregistrement conformément à ladite première instruction de définition reçue, ladite première instruction de définition comprenant au moins l'une des instructions suivantes : une instruction pour définir une qualité de stockage, une instruction pour définir une taille d'espace de stockage et une instruction pour définir une durée de stockage ; et
un module d'enregistrement (1001) configuré de manière à enregistrer un fichier vidéo conformément audit paramètre d'enregistrement ;
**caractérisé en ce que** le routeur local (1700) comprend :
un module d'acquisition (1701) configuré de manière à acquérir le fichier vidéo enregistré par ledit dispositif de caméra ;
un second module de réception (1703) configuré de manière à recevoir une seconde instruction de définition en provenance dudit terminal mobile ;
un second module de définition (1704) configuré de manière à définir un paramètre de stockage selon l'instruction de définition reçue ; et
un module de sauvegarde (1702) configuré de manière à sauvegarder localement le fichier vidéo acquis selon le paramètre de stockage.

9. Système selon la revendication 8, **caractérisé en outre en ce que** le routeur local (1700) comprend un second module de sauvegarde comprenant :
un deuxième sous-module de détection (1702A) configuré de manière à détecter si une image dans le fichier vidéo acquis change ; et
un deuxième sous-module de sauvegarde (1702B) configuré de manière à sauvegarder localement le fichier vidéo acquis, lorsqu'il est détecté que les images dans le fichier vidéo changent.

10. Système selon la revendication 9, **caractérisé en outre en ce que** le deuxième sous-module de détection (1702A) comprend :
un deuxième sous-module de détection dynamique (1702A1) configuré de manière à détecter dynamiquement le fichier vidéo acquis ; et
un troisième sous-module de détermination (1702A2) configuré de manière à déterminer que les images dans le fichier vidéo changent, lorsqu'il est détecté qu'une cible dynamique existe dans le fichier vidéo.
